(19) Europäisches Patentamt / European Patent Office / Office européen des brevets

(11) **EP 2 832 200 B1**

(12) **EUROPÄISCHE PATENTSCHRIFT**

(45) Veröffentlichungstag und Bekanntmachung des Hinweises auf die Patenterteilung:
**30.05.2018   Patentblatt 2018/22**

(51) Int Cl.:
**A01C 7/04** *(2006.01)*       *A01C 7/20 (2006.01)*
**A01C 7/08** *(2006.01)*

(21) Anmeldenummer: **14179610.2**

(22) Anmeldetag: **01.08.2014**

(54) **Verfahren zur Dosierung von körnigem Gut und Dosiervorrichtung für körniges Gut**

Method for dosing a granular material and dosing device for granular materials

Procédé et dispositif de dosage de matériel granulaire

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.08.2013   DE 102013215186**

(43) Veröffentlichungstag der Anmeldung:
**04.02.2015   Patentblatt 2015/06**

(73) Patentinhaber: **Horsch Maschinen GmbH**
**92421 Schwandorf (DE)**

(72) Erfinder: **Funck, Gerald**
**69168 Schatthausen (DE)**

(74) Vertreter: **Benninger, Johannes**
**Benninger Patentanwaltskanzlei**
**Dr.-Leo-Ritter-Strasse 5**
**93049 Regensburg (DE)**

(56) Entgegenhaltungen:
**EP-A2- 1 234 489       WO-A1-2004/004441**
**WO-A1-2013/186175**

**Beschreibung**

Die vorliegende Erfindung betrifft ein Verfahren zur Dosierung von körnigem Gut wie Samenkörner, Dünger o. dgl. sowie eine Dosiervorrichtung für solches körnige Gut mit den Merkmalen der unabhängigen Ansprüche. Das körnige Gut wird durch eine Luftströmung getragen und befördert und durch eine Zuführleitung in ein Dosieraggregat geleitet, wonach es durch eine sich tangential an das Dosieraggregat anschließende und zumindest abschnittsweise geradlinig oder leicht gekrümmt verlaufende Ausgangsleitung geleitet wird.

Aus dem Stand der Technik sind verschiedene Ansätze bekannt, die Drillsaat dahingehend zu verbessern, dass die Aussaat gleichmäßiger erfolgt. Das wichtigste Ziel, das hierbei verfolgt wird, besteht darin, die Kornabstände innerhalb der Reihe nicht zu stark variieren zu lassen, um sich damit einer Einzelkornsaat zumindest grob anzunähern.

Die EP 0 266 722 B1 beschreibt eine Sävorrichtung und ein Säverfahren zur vereinzelnte Abgabe von Samen in eine von einem Schar gezogene Furche. Die vereinzelten Samen werden dabei in einer Leiteinrichtung geführt und durch kurzzeitige Druckluftstöße beschleunigt in die Furche abgegeben.

Die EP 1 243 172 A2 beschreibt eine pneumatische Sävorrichtung, bei der Samenkörner mit Luft befördert werden. Eine Materialverzögerungseinrichtung mit einem Bypasssystem zur Abgabe von Luft ist einem Auslass eines pneumatischen Verteilersystems vorgeordnet.

Aus der US 5 082 141 A ist ein Säaggregat mit einer zylindrischen Trommel zur Aufnahme einer Vielzahl von Samenkörnern offenbart. Die Trommel weist eine spiralförmige innere Strukturierung auf, in der die Samenkörner in gleichmäßiger Reihe geführt werden sollen. Durch gezielte Unterdrucksteuerung sollen vereinzelte Samenkörner abgegeben werden.

Die nach dem Zeitrang der vorliegenden Anmeldung veröffentlichte WO 2013/186175 A1 beschreibt ein Verteilaggregat für körniges Gut, insbesondere ein Säaggregat einer Verteil- oder Sämaschine mit einem Gehäuse. Das Gehäuse weist eine annähernd kreisbahn- und/oder kreissegmentförmige Innenmantelfläche, eine Einlassöffnung und eine an die Innenmantelfläche tangential anschließende Auslassöffnung auf. Innerhalb des Gehäuses rotiert eine Fördereinrichtung, welche eine oder mehrere Öffnungen und/oder Absätze an ihrem Außenbereich aufweist. In einem ersten Gehäuse- und/oder Förderbereich bildet die Fördereinrichtung mit der Gehäuseinnenmantelfläche eine Tasche, in der Körner gedrängt werden und durch Zentrifugalkräfte kreisförmig befördert werden. In einem zweiten Gehäuse- und/oder Vereinzelungsbereich verbleibt durch eine veränderte Kontur der Innenmantelfläche des Gehäuses nur jeweils ein einzelnes Korn weiterhin unter Zentrifugalkrafteinflüssen in der Öffnung bzw. im Absatz der Fördereinrichtung. Hierbei werden überschüssige Körner abgesondert und zur erneuten Förderung in den ersten Gehäusebereich zurückgeführt.

Die nach dem Zeitrang der vorliegenden Anmeldung veröffentlichte DE 10 2012 105 081 A1 offenbart ein Säaggregat einer Sämaschine mit einer im Gehäuse rotierenden Fördereinrichtung. Die von einem Luftstrom getragenen und in das Gehäuse eintretenden Körner werden durch Fliehkräfte an einem Innenmantelbereich des Gehäuses gehalten, drängen sich dort und richten sich gegeneinander aus, so dass sie in regelmäßigen Abständen und einzeln das Gehäuse in tangentialer Richtung verlassen.

Weiter offenbart die WO 2004/004441 A1 eine Vorrichtung zur Verteilung von Granulaten mit einem Verteilungselement, das drehbar in einem Gehäuse angeordnet ist. Der abgewinkelte Abschnitt und der Umfang des Verteilerelements bilden zusammen einen Weg zur Trennung des Granulates. Alternativ und/oder zusätzlich können Hindernisse auf der Innenseite des Gehäuses angeordnet sein, bspw. in Form von Rippen.

Da sich die Einzelkornsaat bei Getreide aus verschiedenen Gründen, im Wesentlich jedoch aus wirtschaftlichen Gründen bisher nicht durchsetzen konnte, versucht das vorliegende, erfindungsgemäße Verfahren, die Korneinzelung bei der pneumatisch unterstützten Aussaat bei herkömmlichen Drillmaschinen soweit zu verbessern, dass von einer weitgehend äquidistanten Aussaat, d.h. von weitgehend konstanten Kornabständen gesprochen werden kann, die einer Einzelkornsaat zumindest sehr nahe kommt.

Somit besteht ein erstes Ziel der vorliegenden Erfindung darin, ein solches verbessertes Korneinzelungsverfahren zur Verfügung zu stellen, das sich nicht nur für große Samenkörner wie Mais, sondern bspw. auch für Kornarten wie Getreide, Sonnenblumen oder Raps eignet. Dieses erste Ziel der Erfindung wird mit dem Gegenstand des unabhängigen Verfahrensanspruchs erreicht; Merkmale vorteilhafter Weiterbildungen der Erfindung ergeben sich aus den abhängigen Ansprüchen.

So sieht die vorliegende Erfindung eine Dosiereinheit gemäß Anspruch 1 zur Dosierung von körnigem Gut wie Samenkörner, Dünger o. dgl. vor, die insbesondere Bestandteil eines Verteil- oder Säaggregats einer Verteil oder Sämaschine sein kann. Die Dosiereinheit weist eine tangential in ein Dosieraggregat mündende Zuführleitung zur Zuführung einer Luftströmung auf, die das körnige Gut trägt und befördert. Das Dosieraggregat weist zudem eine ungefähr kreisbogenförmige Innenmantelfläche mit einem Bogenwinkel von wenigstens ca. 180 Grad, insbesondere von ca. 270 Grad oder mehr sowie Einrichtungen zur zumindest teilweisen Separierung des an der Innenmantelfläche geführten körnigen Guts von der tragenden und fördernden Luftströmung auf. Außerdem ist eine sich tangential an das Dosieraggregat anschließende und zumindest abschnittsweise geradlinig oder leicht gekrümmt verlaufende Ausgangsleitung zur Ableitung der Luftströmung mit dem annähernd gleichmäßig dosierten und/oder äquidistant beförderten körnigen Gut vorgesehen. Gemäß der vorliegenden Erfindung sind innerhalb des Dosieraggregats wenigstens eine Leitkante zur Führung der Körner sowie eine mit Fächern ausgestattete rotierende Vereinzelungs- und/oder Mitnehmerscheibe angeordnet. Die Leitkante liegt typischerweise in etwa in einer Querschnittsebene des Gehäuses des Dosieraggregats; die Rotationsachse der Vereinzelungs- bzw. Mitnehmerscheibe liegt normalerweise senkrecht dazu, d.h. parallel oder deckungsgleich zur Längsmittelachse des Gehäuses.

Die rotierende Mitnehmer- und/oder Vereinzelungsscheibe sorgt im Wesentlichen für die Förderung und/oder Separierung der an die Innenmantelfläche des Gehäuses gedrängten und dort beförderten Körner, die zudem im Bereich der Leitkante geführt werden. Optionale Leitstege im Gehäuse des Dosieraggregats können zusätzlich dafür sorgen, dass die Körner tendenziell an die Innenmantelfläche des Gehäuses des Dosieraggregats befördert und dadurch aus dem verwirbelten Luftstrom im mittleren Bereich des Gehäuses befördert werden, um dort mit der rotierenden Mitnehmerscheibe in gleichmäßige Kornabstände gebracht zu werden.

Innerhalb des Dosieraggregats ist erfindungsgemäß ein Fächersieb angeordnet, das einen, zwei, drei oder mehr Leitstege aufweist, die sich jeweils von einem Zentrum des Dosieraggregats radial, schräg oder gekrümmt in Richtung zur Innenmantelfläche erstrecken. Diese Leitstege des sog. Fächersiebs können bspw. mehrere gegenüber einer radialen, d.h. sternförmigen Anordnung leicht schräg oder mit konvexer Krümmung schräg gestellte Stege oder Rippen aufweisen. So können bspw. zwei, drei, vier oder mehr sichelförmigen Leitstege - z.B. insgesamt sechs an der Zahl -an einer Stirnseite des Innenraums des Dosieraggregats verankert sein und auf diese Weise in den Innenraum des Dosieraggregats ragen und die dort geführte Luftströmung beeinflussen. Wahlweise kann auch nur eine solche Rippe bzw. ein solcher Leitsteg vorhanden sein, weil auch bereits ein einziger Leitsteg geeignet sein kann, die Luftströmung und die mit der Luftströmung transportierten Körner in gewünschter Weise zu lenken und zu beeinflussen.

Die erwähnten Leitstege oder Rippen können bspw. jeweils eine Höhe aufweisen, die mindestens einem Drittel der Innenraumbreite zwischen den gegenüber liegenden Stirnflächen des Dosieraggregats entspricht. Ggf. kann die Höhe auch der Hälfte oder etwas mehr der Innenraumbreite zwischen den gegenüber liegenden Stirnflächen des Dosieraggregats entsprechen. Die Wirkungsweise dieser Leitstege oder Rippen beruht darauf, dass eine Kornbewegung eines von der Luftströmung in das Gehäuse getragenen Korns entlang der konvexen Außenseite eines der Leitstege beeinflussbar ist. In diesem inneren Bereich des Dosieraggregats herrschen Luftverwirbelungen, während die an die Innenmantelfläche des Gehäuses beförderten Körner von der rotierenden Mitnehmerscheibe befördert und separiert werden. Die Leitstege sorgen nun dafür, dass die Körner tendenziell an die Innenmantelfläche des Gehäuses des Dosieraggregats befördert und dadurch aus dem verwirbelten Luftstrom im mittleren Bereich des Gehäuses befördert werden, um dort mit der rotierenden Mitnehmerscheibe in gleichmäßige Kornabstände gebracht zu werden.

Eine Variante der Dosiereinheit kann vorsehen, dass die mit Fächern ausgestattete Mitnehmer- und/oder Vereinzelungsscheibe ungefähr koaxial zum vorgesetzten Fächersieb rotiert. Hierbei kann eine Ausrichtung der Leitstege des Fächersiebs entgegengesetzt zur Ausrichtung der Fächer der Mitnehmer- und/oder Vereinzelungsscheibe sein, was die Kornseparierung verbessern kann. Hierbei können die Fächer der Mitnehmer- und/oder Vereinzelungsscheibe und/oder die Leitstege des Fächersiebes insbesondere sichelförmig gekrümmt sein, wobei eine konvexe Außenseite dieser sichelförmigen Krümmungen jeweils zur Außenseite bzw. zur Gehäuseinnenmantelfläche weist. Im vorliegenden Zusammenhang wird die mit den Fächern ausgestattete Scheibe auch als Fächerscheibe bezeichnet.

Wahlweise können am feststehenden Fächersieb selbst zahlreiche Leitstege vorhanden sein, während die rotierende Scheibe nur wenige Fächer trägt.

Die Körner bewegen sich im Dosieraggregat unter dem Einfluss der rotierenden Fächerscheibe, bei der die außen beförderten Körner an einem der wenigstens zwei Stege der rotierenden Mitnehmerscheibe anliegen und in einer Führungsnut an der Innenmantelfläche des Gehäuses geführt werden können, während die weiter innen befindlichen Körner im verwirbelten Luftstrom getragen werden, der dort herrscht. Allerdings streben auch diese Körner nach außen, unterstützt von dem feststehenden Leitsteg des Fächersiebs. Eine Zielposition für die nach außen strebenden oder nach außen beförderten Körner ist durch eine sog. Körnertasche oder Aussparung der rotierenden Scheibe gebildet, während die noch weiter innen befindlichen Körner entweder vom Fächer der Förderscheibe geführt oder von dem feststehenden Leitsteg geführt werden bzw. dort abprallen. Hierbei können die Körner jeweils unterschiedliche axiale Positionen einnehmen. Während somit ein innen liegendes Korn vom Fächer der Förderscheibe geführt und allmählich nach außen und aus dem verwirbelten Luftstrom gedrängt wird, kann bspw. ein anderes Korn oder mehrere andere Körner in axialer Richtung versetzt sein, so dass sie nicht von der rotierenden Fächerscheibe erfasst werden, sondern am feststehenden Steg des Fächersiebs anliegen bzw. dort abprallen oder geführt werden. Die anderen, außen befindlichen Körner können sich dagegen bereits in oder nahe an der Zielposition befinden, die durch die Körnertasche der rotierenden Fächerscheibe gebildet ist, von der sie dann in Richtung zum Kornauslass befördert werden.

Wie erwähnt, dient der feststehende Leitsteg innerhalb des Dosieraggregats der Gruppierung der sich allmählich beruhigenden Körner, die sich noch nicht der Zielposition an den Aufnahmetaschen der rotierenden Stege genähert haben. Einzelne Körner können dabei vom Fächer beschleunigt und gleichzeitig nach außen geführt werden. Andere Körner, die bereits beschleunigt wurden, sich jedoch ggf. etwas von der rotierenden Scheibe entfernt haben, werden dadurch von dem feststehenden Leitsteg gebremst und gleichzeitig nach außen geführt. Diese Körner werden hierbei in Richtung zur Tasche geführt und von der Gehäuseschräge zur Scheibe gedrängt. Dabei kann es auch vorkommen, dass einzelne Körner zwischen Gehäuse, Scheibe und Fächer so lange hin und her springen, bis sie in ihren Bewegungen beruhigt sind. Körner, die entlang der Gehäusewand wandern, werden dort in aller Regel beruhigt.

Im Aufnahmebereich der Körner an der Scheibe befinden sich die Körner in mehr oder weniger zufälligen Bewegungen. Es gibt hierbei Körner, die langsam sind, Körner, die von der Luft getragen werden und Körner, die sehr schnell sind, da Sie bereits den Fächer berührt haben und davon abgeprallt sind. Daher ergeben sich unterschiedliche Positionen und Bewegungen. Speziell bei kleinem Saatgut (Raps) ist die Gefahr erhöht, dass sich die Körner nicht beruhigen, sondern in der Luft wirbelnd in Richtung des Vereinzelungsbereiches wandern. Mit dem Leitsteg sollen Körner, welche sich axial zu weit von der Scheibe entfernt haben, etwas abgebremst werden und wieder nach außen an die Gehäusewand geführt werden. Die äußere Gehäusewand und die mit der Säscheibe ergebende Nut sorgen wiederum erneut für eine Beruhigung der Körner.

Manche Körner wären ohne das Fächersieb mit dem Leitsteg in Gefahr, den Füllbereich undefiniert zu verlassen, was somit die Gefahr erhöht, dass sie auch zufällig in Richtung Dosiererausgang wandern. Durch das Abbremsen des Korns wird dieses erneut nach außen gedrängt, was auch die Wahrscheinlichkeit erhöht, dass das Korn in die Tasche der rotierenden Fächerscheibe wandert oder zumindest als Teil einer Traube von der Fächerscheibe bewegt wird. Somit wird zumindest das unterste Korn in die Tasche gedrückt und befördert, wonach es definiert in den Vereinzelungsbereich geschleudert wird. Durch das Anliegen im Bereich der Vereinzelungstasche wird der Transport (Wurfbewegung) durch den Vereinzelungsbereich wesentlich definierter.

Der Fächer der Vereinzelungscheibe sorgt für eine Beschleunigung nach außen und für ein Führen des Korns; der Leitsteg des Fächersiebs sorgt für ein Abbremsen und ein nach außen Führen des Korns. Diese Pendelbewegung zwischen Beschleunigung und Abbremsen führt die Körner allmählich nach außen und zur Tasche der rotierenden Fächerscheibe. Während sich einzelne Körner beruhigen und in die Tasche der rotierenden Fächerscheibe wandern, prallen andere nach vorne und werden anschließend von dem rotierenden Fächer wieder eingeholt. Wieder andere Körner prallen gegen die Leitsteg(e) und werden dabei abgebremst. Diese Körner werden wieder nach außen geführt, um in der von Gehäusewand und Scheibe gebildeten Nut erneut erfasst und beruhigt zu werden.

Bei einer weitere Ausführungsvariante der Dosiereinheit kann eine gleichmäßige oder sich mit zunehmendem Abstand vom Dosieraggregat sichelförmig öffnende Krümmung der Ausgangsleitung tangential an eine kornführende Innenwandung des Dosieraggregats anschließen.

Die Taschen oder Mitnehmernuten am Außenumfang der mit sichelförmigen Fächern o. dgl. ausgestatteten rotierenden Vereinzelungs- und/oder Mitnehmerscheibe sind vorzugsweise in ihrer Gestaltung an das jeweils beförderte Saatgut bzw. an die Körnergröße und/oder -kontur angepasst. Eine besonders bevorzugte Variante der Mitnehmernuten oder -taschen kann bspw. vorsehen, dass diese sich in einem konisch abgeschrägten äußeren Randbereich der rotierenden Scheibe befinden und entgegen der Drehrichtung schrägradial nach außen geneigt sind, so dass eine erleichterte Abgabe der Körner zum Auslass hin in radialer Richtung nach außen ermöglicht ist, wobei dieser radialen Abgaberichtung eine axiale Bewegungskomponente überlagert sein kann.

Die Erfindung umfasst weiterhin ein Verfahren gemäß Anspruch 8 zur Dosierung von körnigem Gut wie Samenkörner, Dünger o. dgl., insbesondere innerhalb eines Verteil- oder Säaggregats einer Verteil oder Sämaschine, bei dem das durch eine Luftströmung getragene und beförderte körnige Gut durch eine Zuführleitung tangential in ein Dosieraggregat geleitet, dort in einem ungefähr kreisbogenförmigen Verlauf mit einem Bogenwinkel von wenigstens 180 Grad, insbesondere von 270 Grad oder mehr unter zumindest teilweiser Separierung des körnigen Guts von der tragenden und fördernden Luftströmung geführt und tangential in eine sich an das Dosieraggregat anschließende und zumindest abschnittsweise geradlinig oder leicht gekrümmt verlaufende Ausgangsleitung geleitet wird, wobei das dort annähernd gleichmäßig dosierte und/oder äquidistant beförderte körnige Gut von der das Dosieraggregat weitgehend vollständig durch die Ausgangsleitung verlassenden abgeleiteten Luftströmung getragen wird. Das körnige Gut kann innerhalb des Dosieraggregats mit mechanischer Unterstützung und/oder unter zumindest teilweiser Separierung von der tragenden Luftströmung an einer Innenmantelfläche oder Innenwandung geführt werden, wobei den sich der Ausgangsleitung nähernden einzelnen Körnern in etwa gleiche Abstände voneinander aufgeprägt werden. Wahlweise kann die Luftströmung in einem inneren Bereich des Dosieraggregats und zumindest teilweise von den kornführenden Bereichen der Innenmantelfläche oder Innenwandung beabstandet geführt werden. Auch kann vorgesehen sein, dass die Luftströmung weitgehend im Bereich des wenigstens einen Fächersiebs geführt wird. Dabei wird die das körnige Gut tragende Luftströmung ununterbrochen von der Zuführleitung, durch das Dosieraggregat und bis zur Ausgangsleitung geführt, so dass die durch die Ausgangsleitung geführte und das annähernd äquidistant beförderte körnige Gut tragende und fördernde Luftströmung innerhalb des Dosieraggregats beschleunigt wird. Die im Dosieraggregat beschleunigte Luftströmung tritt mit einer Geschwindigkeit in die Ausgangsleitung ein und aus dieser hinaus, die größer ist als eine Zuführgeschwindigkeit, mit der die Luftströmung in die Zuführleitung eintritt. Die Förderung der Körner erfolgt zumindest durch Unterstützung einer mit Fächern oder Stegen ausgestatteten rotierenden Vereinzelungs- und/oder Mitnehmerscheibe. Erfindungsgemäß ist innerhalb des Dosieraggregats wenigstens ein Fächersieb angeordnet, das einen, zwei, drei oder mehr Leitstege aufweist, die sich jeweils von einem Zentrum des Dosieraggregats radial, schräg oder gekrümmt in Richtung zur Innenmantelfläche erstrecken.

Das körnige Gut oder Saatgut sowie die das Gut tragende Luftströmung kann in dem vorzugsweise scheibenförmig aufgebauten Dosieraggregat bspw. eine Teilumdrehung oder eine komplette Umdrehung ausführen, bevor es in die Ausgangsleitung mündet. So kann bei dem Verfahren vorgesehen sein, dass die tangential in das Dosieraggregat geleitete Luftströmung dort in einem ungefähr kreisbogenförmigen Verlauf mit einem Bogenwinkel von ca. 330 bis 390 Grad oder auch mehr geführt und tangential in die Ausgangsleitung geleitet wird. Da der Luftstrom an keiner Stelle unterbrochen wird, sondern ununterbrochen und in weitgehend gleichmäßig gekrümmtem Verlauf (mit tangentialen Übergängen) durch das Dosieraggregat geleitet wird, kann die auf diese Weise stark beruhigte und vergleichmäßigte Luftströmung dazu genutzt werden, im Zusammenhang mit lenkenden, leitenden und/oder separierenden Wirkungselementen innerhalb des Dosieraggregats, die Kornabstände weitgehend zu vergleichmäßigen, so dass die Körner, welche durch die Ausgangsleitung geführt werden, sowohl weitgehend gleiche Korngeschwindigkeiten als auch weitgehend gleiche Abstände voneinander aufweisen.

Wahlweise kann das körnige Gut innerhalb des Dosieraggregats mit mechanischer Unterstützung und/oder unter zumindest teilweiser Separierung von der tragenden Luftströmung an einer Innenmantelfläche oder Innenwandung geführt werden, wobei den sich der Ausgangsleitung nähernden einzelnen Körnern in etwa gleiche Abstände voneinander aufgeprägt werden. In diesem Zusammenhang kann vorgesehen sein, dass die Luftströmung in einem inneren Bereich des Dosieraggregats und zumindest teilweise von den kornführenden Bereichen der Innenmantelfläche oder Innenwandung beabstandet geführt wird. Wesentlich für den von der Erfindung erzielten Effekt ist es dabei, dass die das körnige Gut tragende und fördernde Luftströmung ununterbrochen von der Zuführleitung, durch das Dosieraggregat und bis zur Ausgangsleitung geführt wird.

In einer weiteren Ausführungsvariante kann vorgesehen sein, dass die durch die Ausgangsleitung geführte und das annähernd äquidistant beförderte körnige Gut tragende und fördernde Luftströmung innerhalb des Dosieraggregats beschleunigt wird, was insbesondere durch die rotierende Förder- und/oder Fächerscheibe erfolgen kann. Auf diese Weise kann erreicht werden, dass die im Dosieraggregat beschleunigte Luftströmung mit einer Geschwindigkeit in die Ausgangsleitung eintritt und aus dieser an einer Mündung hinaustritt, die größer ist als eine Zuführgeschwindigkeit, mit der die Luftströmung in die Zuführleitung eintritt.

Das Verfahren sieht wahlweise vor, dass das in einem äußeren Bereich der gekrümmten Ausgangsleitung annähernd äquidistant und/oder gleichmäßig dosierte und beförderte körnige Gut von der das Dosieraggregat weitgehend vollständig durch die Ausgangsleitung verlassenden abgeleiteten Luftströmung getragen wird. Vorzugsweise wird weitgehend der gesamte Luftstrom im Dosieraggregat geführt und durch dieses hindurch geleitet. Weiterhin kann vorgesehen sein, dass sich die Kreisbögen der Ausgangsleitung und der Innenmantelfläche des Dosieraggregats tangential berühren und die Luft- und Kornführungsverläufe stufen- bzw. nahtlos ineinander übergehen. Wahlweise ist es möglich, dass sich ein Krümmungsradius der Ausgangsleitung mit steigendem Abstand vom Dosieraggregat stetig oder unstetig öffnet. Alternativ hierzu kann der Krümmungsradius der Ausgangsleitung zumindest in einem an das Dosieraggregat grenzenden Abschnitt annähernd konstant sein. Mit Hilfe des wahlweisen Verfahrens kann das auszubringende körnige Gut weitgehend kollisionsfrei und/oder verwirbelungsfrei in der Ausgangsleitung geführt werden, da es in seiner Bewegungsbahn in etwa dem Verlauf der Ausgangsleitung folgt. Vorteilhaft für einen weitgehend kollisionsfreien Bewegungsverlauf der Körner innerhalb der Ausgangsleitung ist ein zunehmendes Geschwindigkeitsprofil der in der Ausgangsleitung geführten Luftströmung vom Innen- zum Außenradius. D.h., die dem Außenradius nähere Luft, welche die Körner trägt, strömt schneller als die am Innenradius geführte Luft.

Wenn im vorliegenden Zusammenhang von einer weitgehend kollisionsfreien Kornförderung die Rede ist, so sind damit Kollisionen der Körner untereinander gemeint, die mit Hilfe des erfindungsgemäßen Verfahrens sowie durch den Betrieb der erfindungsgemäßen Dosiervorrichtung weitestgehend verhindert werden können. Eine annähernd verwirbelungsfreie Kornförderung meint dementsprechend einen dem Leitungsverlauf der Zuführ- und Ausgangsleitung sowie der kreisförmigen Bewegungsbahn entlang des Gehäuses der Dosiervorrichtung ungefähr folgenden Korntransport.

Wie oben erwähnt, kann das körnige Gut innerhalb des Dosieraggregats mit mechanischer Unterstützung und/oder unter zumindest teilweiser Separierung von der tragenden Luftströmung an einer Innenmantelfläche oder Innenwandung geführt werden, wobei den sich der Ausgangsleitung nähernden einzelnen Körnern in etwa gleiche Abstände voneinander aufgeprägt werden. Dieses Verfahren hat den Vorteil, dass die das körnige Gut tragende Luftströmung ununterbrochen von der Zuführleitung, durch das Dosieraggregat und bis zur Ausgangsleitung geführt wird. Zudem kann dadurch die durch die Ausgangsleitung geführte und das annähernd äquidistant beförderte körnige Gut tragende und fördernde Luftströmung innerhalb des Dosieraggregats beschleunigt werden, so dass die im Dosieraggregat beschleunigte Luftströmung mit einer Geschwindigkeit in die Ausgangsleitung eintritt und aus dieser hinaustritt, die größer ist als eine Zuführgeschwindigkeit, mit der die Luftströmung in die Zuführleitung eintritt. Allerdings ist zu erwähnen, dass diese Beschleunigung der kornfördernden Luft in erster Linie durch die verschiedenen Leitungsquerschnitte bewirkt wird, da die Ausgangsleitung normalerweise einen kleineren Querschnitt aufweist als die zuführende Leitung bzw. die Saatleitung, die bspw. von einem zentralen Verteilerkopf zu den Säscharen mündet. Das Korn wird in der Dosiervorrichtung beschleunigt und ist hierbei bereits von der Luftströmung umgeben, welche die Körner bis in das Fallrohr und zur Säschar begleitet und trägt.

Bei der Dosiervorrichtung kann die durch die Ausgangsleitung geführte und das annähernd äquidistant beförderte körnige Gut tragende und fördernde Luftströmung innerhalb des Dosieraggregats beschleunigt sein, wobei insbesondere eine die Luftströmung im Dosieraggregat beschleunigende rotierende Förder- oder Fächerscheibe vorgesehen ist. Diese rotiert in etwa konzentrisch innerhalb des Dosieraggregats. Außerdem kann für die ungefähr konzentrisch innerhalb des Dosieraggregats rotierende Förder- oder Fächerscheibe ein elektromotorischer Antrieb vorgesehen sein.

Die beschriebene Dosiervorrichtung eignet sich insbesondere zur Platzierung in kornführenden Leitungen, insbesondere in Saatleitungen einer an sich bekannten Sämaschine, insbesondere einer solchen, die pneumatisch fördert. In jeder Saatleitung kann eine solche Dosiervorrichtung angeordnet sein, wo sie für eine Sicherstellung einer annähernd vereinzelten Saatgutverteilung sorgen kann. Damit handelt es sich bei der Dosiervorrichtung um ein Anbaugerät, das für die Ergänzung einer existierenden Sämaschine geeignet ist und diese zu einer Einzelkornsämaschine macht.

Die Luftströmung trägt und befördert das körnige Gut während seines gesamten Transports vom Kornvorrat bis zur Säschar, wobei die Luftströmung innerhalb des Dosieraggregats in einem ungefähr kreisbogenförmigen Verlauf geführt wird und tangential in eine sich an das Dosieraggregat anschließende und zumindest abschnittsweise leicht gekrümmt verlaufende Ausgangsleitung geleitet wird. Dabei kann vorgesehen sein, dass sich die Kreisbögen der Ausgangsleitung und der Innenmantelfläche des Dosieraggregats tangential berühren und die Luft- und Kornführungsverläufe stufen-/nahtlos ineinander übergehen. Außerdem ist ein Krümmungsradius der Ausgangsleitung zumindest in einem an das Dosieraggregat grenzenden Abschnitt annähernd konstant. Wahlweise kann vorgesehen sein, dass sich der Krümmungsradius der Ausgangsleitung mit steigendem Abstand vom Dosieraggregat stetig oder unstetig öffnet.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Fig. 1 zeigt eine schematische Darstellung einer pneumatisch arbeitenden Sämaschine mit volumendosiertem Saatgut, das über einen Zentralverteiler zu einzelnen Saatleitungen mit mündungsseitig daran angeordneten Säscharen geführt wird.

Fig. 2 zeigt in einer schematischen Darstellung den grundsätzlichen Aufbau einer erfindungsgemäßen Dosiervorrichtung, die innerhalb einer Saatleitung einer Sämaschine gemäß Fig. 1 angeordnet ist.

Fig. 3 zeigt eine schematische Draufsicht auf eine erste Variante eines Dosieraggregats.

Fig. 4 zeigt eine weitere Draufsicht auf das Dosieraggregat gemäß Fig. 3.

Fig. 5 zeigt eine perspektivische Ansicht einer weiteren Variante eines Dosieraggregats.

Fig. 6 zeigt eine weitere Ansicht des Dosieraggregats gemäß Fig. 5.

Fig. 7 zeigt eine perspektivische Ansicht einer nicht erfindungsgemäßen Variante eines Dosieraggregats.

Fig. 8 zeigt eine perspektivische Ansicht einer weiteren nicht erfindungsgemäßen Variante eines Dosieraggregats.

Fig. 9 zeigt eine perspektivische Ansicht einer weiteren Variante eines Dosieraggregats.

Fig. 10 zeigt eine weitere Ansicht des Dosieraggregats gemäß Fig. 9.

Fig. 11 zeigt eine schematische Draufsicht auf Komponenten des Dosieraggregats.

Fig. 12 zeigt eine perspektivische Ansicht von wichtigen Komponenten des Dosieraggregats.

Fig. 13 zeigt eine weitere perspektivische Ansicht zur Verdeutlichung von Kornbewegungen innerhalb eines nicht erfindungsgemäßen Dosieraggregats.

Fig. 14 zeigt eine weitere perspektivische Ansicht zur Verdeutlichung von Kornbewegungen innerhalb des Dosieraggregats.

Fig. 15 zeigt eine weitere perspektivische Ansicht zur Verdeutlichung von Kornbewegungen innerhalb des Dosieraggregats.

Fig. 16 zeigt zwei weitere perspektivische Ansichten zur Verdeutlichung von Kornbewegungen innerhalb des Dosieraggregats.

Fig. 17 zeigt eine weitere perspektivische Ansicht zur Verdeutlichung von Kornbewegungen innerhalb des Dosieraggregats.

Fig. 18 zeigt eine weitere perspektivische Ansicht zur Verdeutlichung von Kornbewegungen innerhalb des Dosieraggregats.

Fig. 19 zeigt eine weitere perspektivische Ansicht zur Verdeutlichung von Kornbewegungen innerhalb des Dosieraggregats.

Fig. 20 zeigt in einer schematischen Darstellung die Kontur einer als Saatleitung ausgebildeten Ausgangsleitung, die tangential an die Dosiervorrichtung anschließt.

Fig. 21 zeigt den Strömungsverlauf innerhalb der Ausgangsleitung in schematischer Weise.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

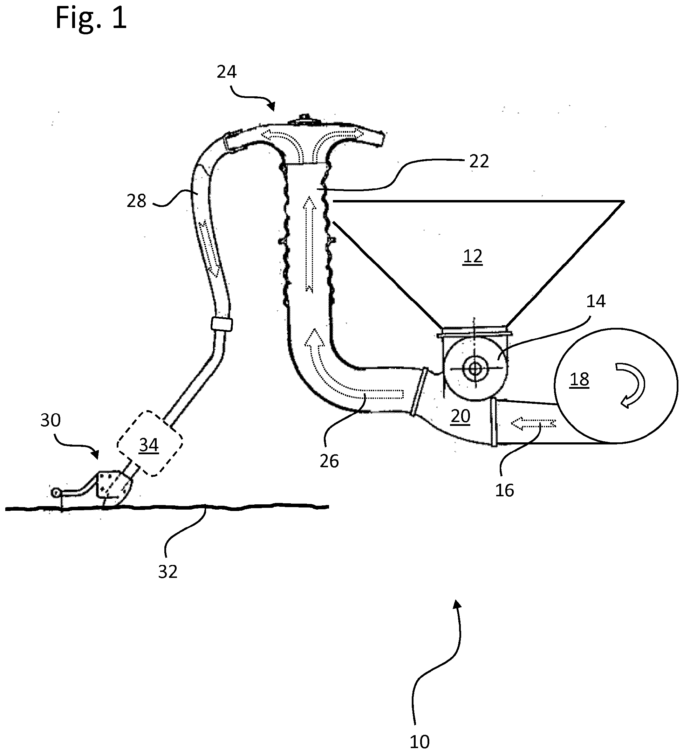

Die schematische Darstellung der Fig. 1 zeigt eine pneumatisch arbeitende Sämaschine 10 mit volumendosiertem Saatgut, das über einen Zentralverteiler zu einzelnen Saatleitungen mit mündungsseitig daran angeordneten Säscharen geführt wird. Die in ihrem grundlegenden Aufbau aus dem Stand der Technik bekannte Sämaschine 10 weist typischerweise einen trichterförmigen Vorratsbehälter 12 mit körnigem Gut, insbesondere mit Saatgut auf, an dessen Unterseite sich eine Dosiereinrichtung 14 befindet, die das körnige Gut bzw. das Saatgut in einen Luftstrom 16 dosiert, der von einem Gebläse 18 erzeugt und in eine Luftleitung 20 befördert wird, die zu einem senkrecht angeordneten Steigrohr 22 führt. An einer Oberseite des Steigrohrs 22 - dies kann bspw. ein sog. Wellrohr o. dgl. sein - befindet sich ein Zentralverteiler 24, der den körnertragenden Luftstrom 26 möglichst gleichmäßig zu einer Vielzahl von Saatleitungen 28 verteilt. Die einzelnen Saatleitungen 28, von denen der besseren Übersichtlichkeit halber nur eine dargestellt ist, münden schließlich jeweils an Säscharen 30, mit denen das Saatgut in den Ackerboden 32 eingebracht wird. Die Zudosierung des vom Vorratsbehälter 12 in den Luftstrom 16 abgegebenen Saatgutes oder körnigen Gutes kann wahlweise nach dem Venturi-Prinzip oder auch durch Unterstützung des unter Druck stehenden, im geschlossenen Drucktank 12 befindlichen Saatgutes erfolgen.

Wie es die Fig. 1 erkennen lässt, befindet sich innerhalb der Saatleitung 28, typischerweise in unmittelbarer Nähe zur Säschar 30, eine erfindungsgemäße Dosiervorrichtung 34, die dafür sorgt, dass die Säschar 30 mit körnigem Gut bzw. mit Saatgut beaufschlagt wird, das in annähernd gleichen Kornabständen und mit weitgehend jeweils gleichen Fördergeschwindigkeiten in den Ackerboden 32 abgegeben wird. Da bei einer realen Sämaschine eine Vielzahl solcher paralleler Säscharen 30 vorgesehen sind (z.B. vierundzwanzig, zweiunddreißig oder mehr), die jeweils mit separaten Saatleitungen 28 verbunden und von diesen versorgt sind, ist auch eine entsprechende Anzahl von erfindungsgemäßen, jeweils gleichartig aufgebauten Dosiervorrichtungen 34 vorgesehen, da jede einzelne Saatleitung 28 eine solche Dosiervorrichtung 34 aufweist.

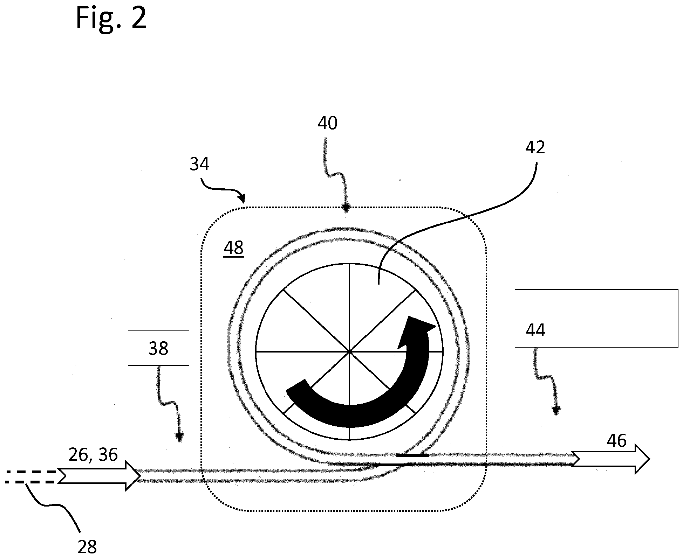

Die Fig. 2 zeigt in einer schematischen Darstellung den grundsätzlichen Aufbau einer erfindungsgemäßen Dosiervorrichtung 34, die innerhalb einer Saatleitung 28 einer Sämaschine 10 gemäß Fig. 1 angeordnet ist. So strömt der körnertragende Luftstrom 26 als Zuluft 36 mit einer ersten Geschwindigkeit $v_1$ durch eine innerhalb der Saatleitung 28 angeordneten Zuführleitung 38 tangential in die Dosiervorrichtung 34 ein, wobei die Zuluft 36 mittels einer im Dosieraggregat 40 der Dosiervorrichtung 34 rotierenden Förder- und/oder Fächerscheibe 42 beschleunigt werden kann. Gleichzeitig werden dadurch die in der Zuluft 36 getragenen und beförderten Körner (z.B. Saatkörner) in einer Weise sortiert und in eine Ordnung zueinander gebracht, dass sie beim tangentialen Austritt aus dem Dosieraggregat 40 in eine Ausgangsleitung 44 ungefähr gleiche Abstände voneinander aufweisen. Die im Dosieraggregat 40 beschleunigte Förderluft 46 bzw. körnertragende Luftströmung tritt aus der Ausgangsleitung 44 mit höherer Geschwindigkeit ($v_2$) aus als sie in die Zuführleitung 38 eintritt, so dass gilt:

$$v_2 > v_1.$$

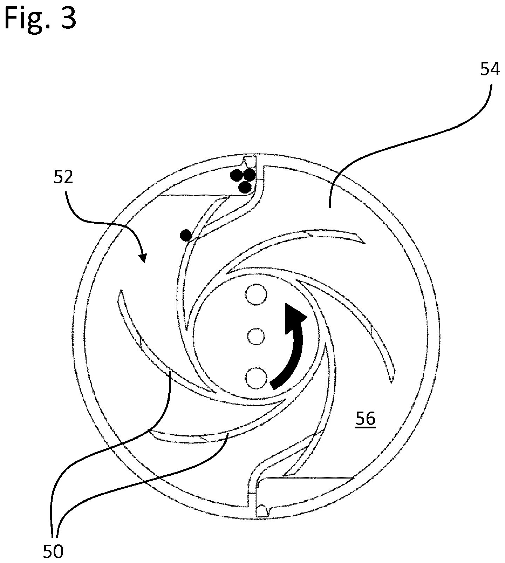

Sowohl die Zuführleitung 38 als auch die Ausgangsleitung 44 münden jeweils annähernd tangential am Dosieraggregat 40 der Dosiervorrichtung 34, in dem die Luft mitsamt den getragenen und beförderten Körnern eine Umlenkung von vorzugsweise mindestens 330 Grad, typischerweise von ca. 360 Grad erfährt. Die Ausgangsleitung 44 kann anschließend in eine Saatleitung (vgl. Fig. 3) münden, die zur Säschar 30 führt (vgl. Fig.

1), mit der die Körner im Ackerboden 32 abgelegt werden. Wahlweise kann die Ausgangsleitung 44 eine sichelförmige Krümmung aufweisen, welche die Krümmung des Luftführungsverlaufs innerhalb des Dosieraggregats 40 aufnimmt und mit größerem Krümmungsradius fortsetzt.

Wie es die schematische Darstellung der Fig. 2 erkennen lässt, ist der Luftstrom von der Versorgung (Gebläse 18) bis zur Abgabe am Säaschar 30 (vgl. Fig. 1) ununterbrochen geführt, so dass der komplette Luftstrom das gesamte System durchläuft, bevor er an der Säaschar 30 mitsamt den transportierten und weitgehend äquidistant abgegebenen Körnern austritt. Die Förder- und/oder Fächerscheibe 42 im Dosieraggregat 40 kann wahlweise motorisch angetrieben sein, insbesondere elektromotorisch. Innerhalb des Dosieraggregats 40 werden die Körner normalerweise vom Luftstrom - zumindest teilweise - getrennt, wobei auch die außen geführten Körner eine kreisbogenförmige Bewegung beschreiben, wenn sie an der Innenmantelfläche des Dosierers 40 entlang geführt werden. Der Luftstrom wird normalerweise auf kleinerem Radius, im Innenbereich des Dosierers 40 geführt und kann dort ggf. verwirbeln, bevor er die in die Ausgangsleitung 44 ausgetragenen, zuvor vom Dosieraggregat 40 beschleunigten und permanent von Transportluft umströmten Körner an deren tangentialer Mündung wieder mitreißt. Die durch die Ausgangsleitung 44 mit der austretenden Luft 46 beförderten Körner eignen sich hervorragend zur exakten Ablage im Boden 32, da ihre Geschwindigkeit und Position sehr genau steuerbar ist. Das gezeigte Verfahren sorgt innerhalb des Dosierers 34 bzw. 40 für die gewünschte Kornbeschleunigung und kann auf weitere Hilfsmittel wie eine zusätzliche Luftversorgung weitgehend verzichten.

Das Saatgut bewegt sich zunächst mit konstanter Geschwindigkeit ($v_1$), die durch die Luftgeschwindigkeit der fördernden Luft 26 vorgegeben ist. Diese Förderluft 26 stammt von der zentralen Luftversorgung der pneumatischen Sämaschine 10, bei der die Körner dem Luftstrom 16 zudosiert werden, der vom Gebläse 18 stammt (Venturi-Prinzip oder Drucktank-Prinzip). In der Dosiervorrichtung 34 wird die Luftgeschwindigkeit durch die Rotation der mechanisch wirkenden Förder-/Fächerscheibe 42 erhöht, wodurch sich die aus der Ausgangsleitung 44 tretende Luftgeschwindigkeit ($v_2$) erhöht und damit die Fördergeschwindigkeit für die Körner. Diese werden anschließend annähernd ungebremst an das Saatleitungsrohr abgegeben. Weiterhin ist in der Fig. 2 ein Gehäuse 48 angedeutet, in dem die Fächerscheibe bzw. Förderscheibe 42 des Dosieraggregats 40 rotiert.

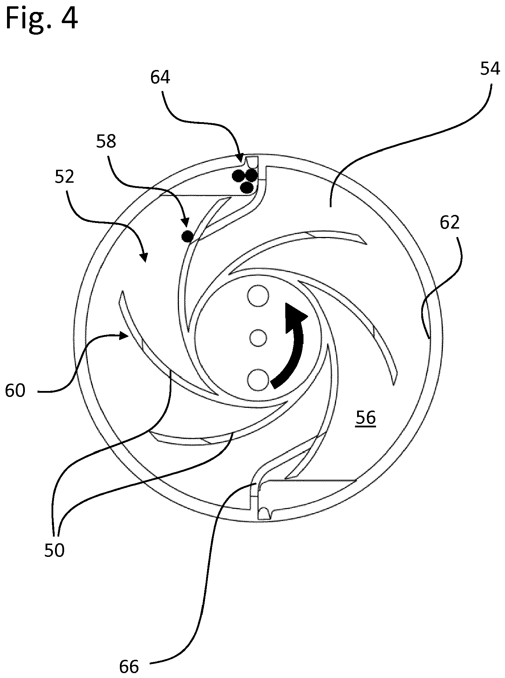

Die Fächer 50 der Fächerscheibe, die im Innenraum 54 des Dosieraggregats 40 angeordnet ist, können bspw. folgende Ausgestaltung aufweisen, wie sie in Fig. 3 gezeigt ist. Dort sind die sichelförmigen Leitstege 50 - insgesamt sechs an der Zahl - erkennbar. Diese Fächer 50 können bspw. jeweils eine Höhe aufweisen, die mindestens einem Drittel der Innenraumbreite zwischen den gegenüber liegenden Stirnflächen 56 oder Flachseiten des Dosieraggregats 40 entsprechen. Die Wirkungsweise lässt sich anhand der folgenden Abbildung (Fig. 4) verdeutlichen, wo eine Kornbewegung eines von der Luftströmung in das Gehäuse 48 getragenen Korns 58 entlang der konvexen Außenseite 60 eines der Leitstege 50 erkennbar ist. In diesem inneren Bereich des Dosieraggregats 40 herrschen Luftverwirbelungen, während die an die Innenmantelfläche 62 des Gehäuses 48 beförderten Körner 64 von einer rotierenden Mitnehmerscheibe 66 befördert und separiert werden.

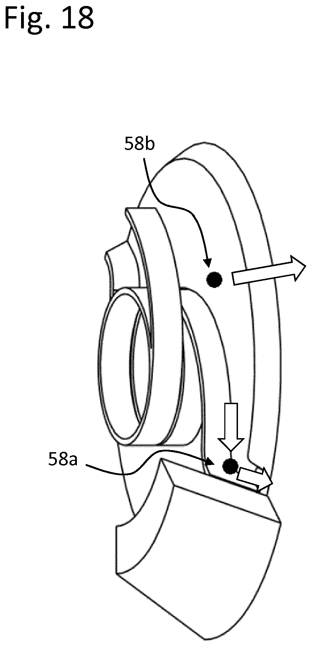

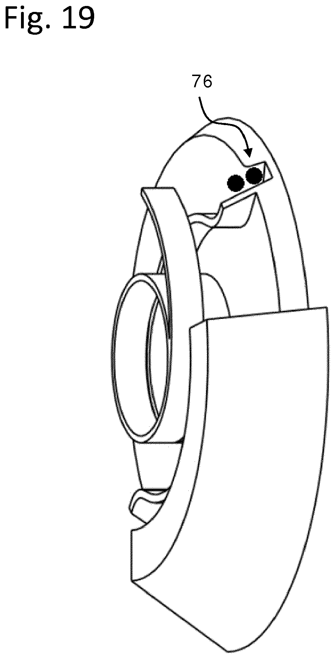

Die Umdrehungsrichtung der rotierenden Mitnehmerscheibe 66 ist in den Figuren 3 und 4 durch einen Richtungspfeil in Nähe ihrer Rotationsachse angedeutet. Die in den gezeigten Darstellungen der Figuren 3 und 4 in 12-Uhr-Stellung (und in der 6-Uhr-Stellung, d.h. oben und unten) befindliche Mitnehmernut oder -tasche in der Scheibe 66 kann die gezeigte Kontur aufweisen. Wahlweise kann die Mitnehmernut an ihrer gegen die Drehrichtung zeigende Rückseite auch abgeschrägt ausgebildet sein, was eine erleichterte Kornabgabe mit radialer Bewegungskomponente erlaubt; vgl. hierzu auch die Darstellungen der Figuren 18 und 19, wo eine Ausführungsvariante der Mitnehmernut und die Bewegungsrichtungen der abgegebenen Körner gezeigt sind.

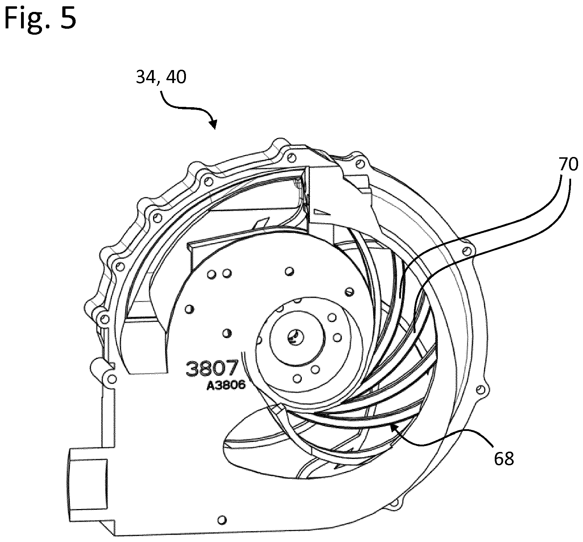

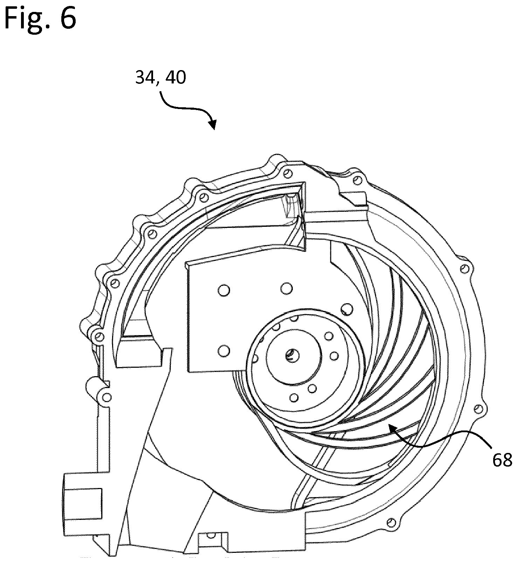

Die Fig. 5 verdeutlicht die Anordnung der Leitstege 70 des Fächersiebs 68. Die Fig. 6 zeigt eine Variante, bei der am feststehenden Fächer 68 selbst zahlreiche Leitstege 70 vorhanden sind, während die rotierende Scheibe 52 (oder Mitnehmerscheibe 42) nur wenige Leitstege 50 trägt.

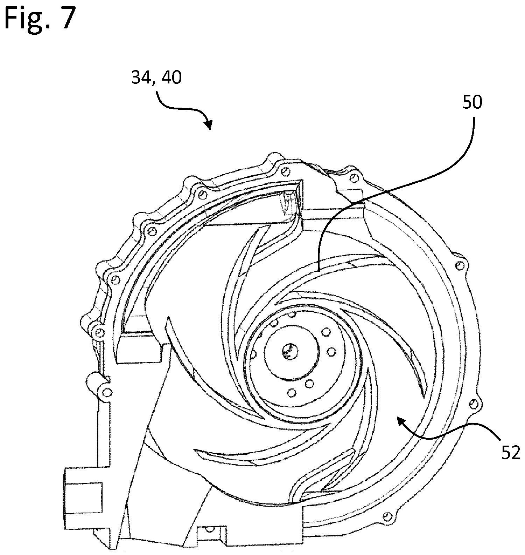

Bei der nicht erfindungsgemäßen Variante der Fig. 7 sind nur an der rotierenden Scheibe 52 (bzw. 42) jeweils Fächer 50 angeordnet, während das Fächersieb fehlt bzw. die dafür vorhandene Blende selbst keine Leitstege aufweist.

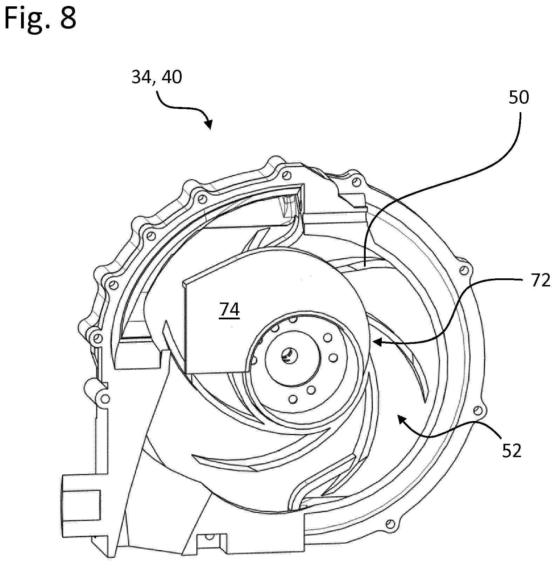

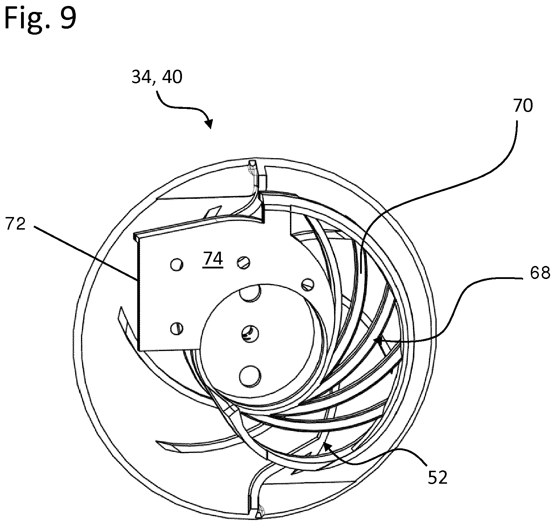

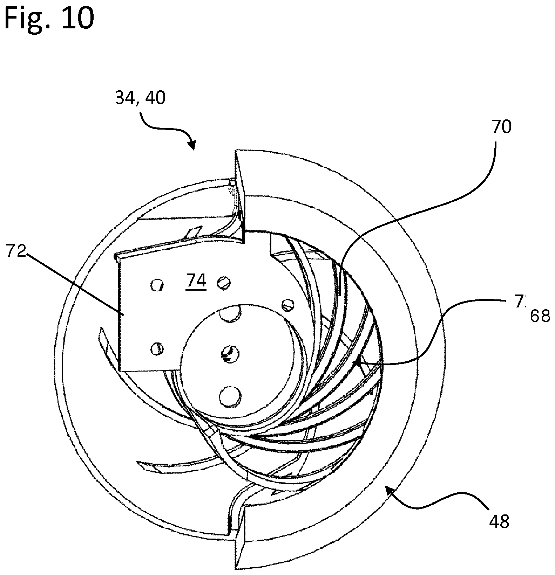

Die Fig. 8 zeigt eine weitere nicht erfindungsgemäße Variante, bei der an der rotierenden Scheibe 52 bzw. 42 mehrere sichelförmige Fächer 50 angeordnet sind, während eine sog. Blende 72 nur einen Leitsteg 74 aufweist, der allerdings eine flächige Kontur besitzt. Die in der Fig. 9 gezeigte Variante der Dosiervorrichtung 34 zeigt eine Blende 72 mit einem flächigen Fächer 74 und ein Fächersieb 68 mit mehreren nach außen führenden, jeweils sichelförmigen Leitstegen 70. Die Fig. 10 zeigt diese Ausführungsvariante mit einem Teilabschnitt eines umhüllenden Gehäuses 48.

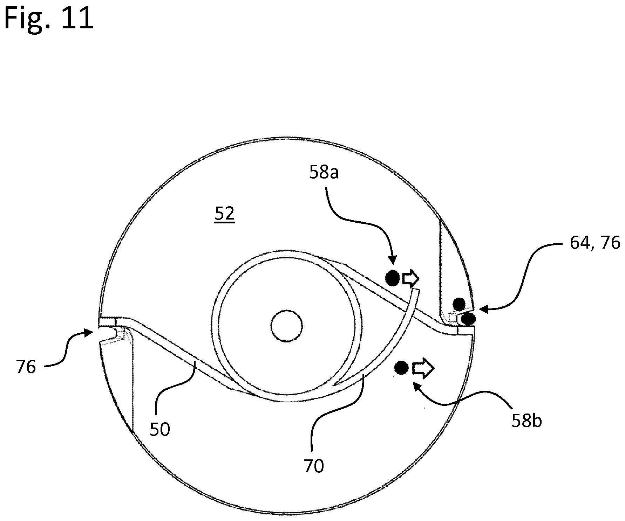

Die schematische Darstellung der Fig. 11 verdeutlicht die Kornbewegungen unter dem Einfluss der rotierenden Mitnehmerscheibe 42 bzw. Förderscheibe oder Fächerscheibe 52, bei der die außen beförderten Körner 64 an einem der beiden Fächer 50 anliegen und in einer Führungsnut an der Innenmantelfläche 62 des Gehäuses 48 (nicht gezeigt) geführt werden können, während die weiter innen befindlichen Körner 58a und 58b im verwirbelten Luftstrom getragen werden, der dort herrscht. Allerdings streben auch diese Körner 58a und 58b nach außen, unterstützt von dem feststehenden Leitsteg 70 des Fächersiebs 68. Eines der beiden außen beförderten Körner 64 befindet sich bereits in seiner Zielposition, nämlich in der sog. Körnertasche 76 oder Aussparung der rotierenden Scheibe 42 oder 52, während die beiden innen befindlichen Körner 58a und 58b entweder vom Fächer 50 der Förderscheibe 42 bzw. 52 geführt (Korn 58a) oder vom Leitsteg 70 geführt werden bzw. dort abprallen (Korn 58b). Beide Körner 58a und 58b streben jedoch tendenziell nach außen in Richtung zur Innenmantelfläche 62 des Gehäuses 48.

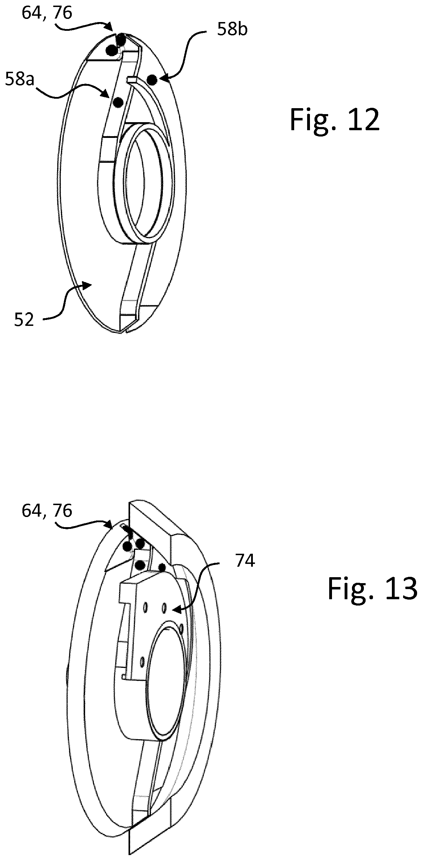

Die folgende Fig. 12 zeigt nochmals diese Kornsituation in perspektivischer Ansicht, wobei die unterschiedliche axiale Position der Körner 58a, 58b und 64 verdeutlicht ist. Während das vordere, innen liegende Korn 58a vom Fächer 50 der Förderscheibe 42, 52 geführt und allmählich nach außen und aus dem verwirbelten Luftstrom gedrängt wird, ist das andere Korn 58b in axialer Richtung versetzt, so dass es nicht von der rotierenden Mitnehmerscheibe 42, 52 erfasst wird, sondern am feststehenden Steg 70 des Fächersiebs 68 anliegt bzw. dort abprallt oder geführt wird. Die anderen beiden, außen befindlichen Körner 64 befinden sich bereits in oder nahe an der Zielposition, die durch die Körnertasche 76 der rotierenden Mitnehmerscheibe 42, 52 gebildet ist.

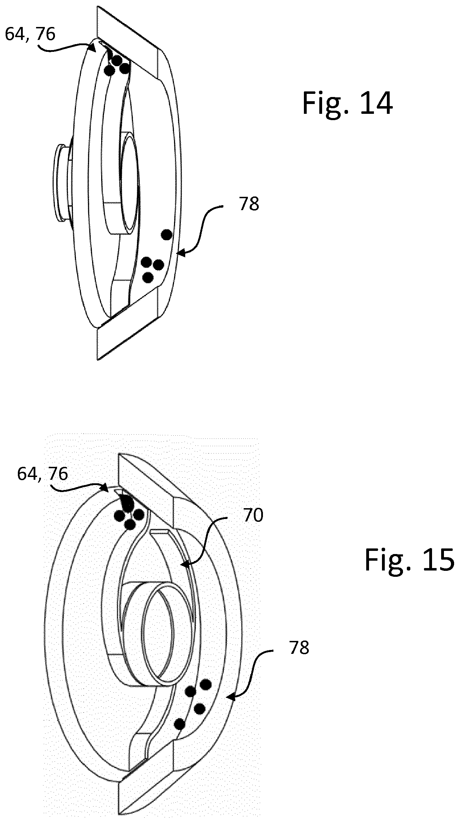

Die Fig. 13 verdeutlicht diese Fördersituation in perspektivischer Ansicht mit Teilen des umgebenden Gehäuses 48, wobei hier in nicht erfindungsgemäßer Weise anstelle des Fächersiebs 68 die Blende 72 mit dem flächigen Leitsteg 74 gezeigt ist. Die folgende Abbildung (Fig. 14) zeigt dieselbe Fördersituation, allerdings ohne die Blende 72. Dort sind die oben befindlichen Körner 64 nahe der Zielposition, während die unten erkennbaren Körner 78 beruhigt werden und sich der Zielposition (oben) allmählich nähern können. Die Fig. 15 zeigt dies nochmals in einer anderen Perspektive, wobei hier das Fächersieb 68 bzw. deren einzelner, feststehender Leitsteg 70 eingezeichnet ist. Dieser feststehende Leitsteg 70 dient der Gruppierung der sich allmählich beruhigenden Körner 78, die sich noch nicht der Zielposition an den Aufnahmetaschen 76 der rotierenden Fächer 50 genähert haben.

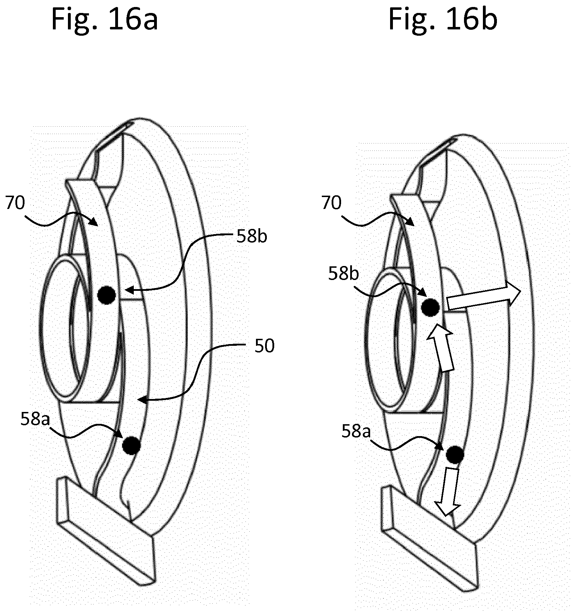

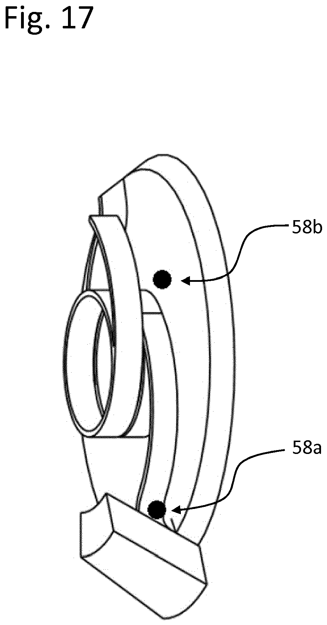

Die folgende Abbildung zeigt eine solche Situation nochmals aus anderer Perspektive, links (Fig. 16a) nur die Körner, rechts (Fig. 16b) mit Richtungspfeilen, welche die Bewegungsrichtungen der Körner 58a und 58b verdeutlichen. Das untere Korn 58a wird vom Fächer 50 beschleunigt und gleichzeitig nach außen geführt. Das obere Korn 58b ist bereits beschleunigt, hat sich jedoch etwas von der rotierenden Scheibe 42 bzw. 52 entfernt, wird dadurch von dem feststehenden Leitsteg 70 gebremst und gleichzeitig nach außen geführt, wie dies die nachfolgende Abbildung (Fig. 17) verdeutlicht. Das Korn 58b wird hierbei in Richtung zur Tasche 76 geführt und von der Gehäuseschräge zur Scheibe 42 bzw. 52 gedrängt. Dabei kann es auch vorkommen, dass das Korn 58b zwischen Gehäuse 48, Scheibe 42, 52 und Fächer 50 so lange hin und her springt, bis es beruhigt ist. Das obere Korn 58b ist nun etwas langsamer geworden und wandert entlang der Gehäusewand, um dort ebenfalls beruhigt zu werden.

Den weiteren möglichen Verlauf der Körner 58b (nach rechts) und 58a (in Richtung zur Tasche 76) macht die folgende Fig. 18 deutlich.

Wie die Körner 64 in ihrer Endposition in der Tasche 76 angeordnet und befördert werden sollten, macht die folgende Fig. 19 deutlich.

Im Aufnahmebereich der Körner an der Scheibe befinden sich die Körner in mehr oder weniger zufälligen Bewegungen. Es gibt hierbei Körner, die langsam sind, Körner, die von der Luft getragen werden und Körner, die sehr schnell sind, da Sie bereits den Mitnehmer bzw. Fächer berührt haben und davon abgeprallt sind. Daher ergeben sich unterschiedliche Positionen und Bewegungen. Speziell bei kleinem Saatgut (Raps) ist die Gefahr erhöht, dass sich die Körner nicht beruhigen, sondern in der Luft wirbelnd in Richtung Vereinzelungsbereiches wandern. Mit dem Leitsteg sollen Körner, welche sich axial zu weit von der Scheibe entfernt haben, etwas abgebremst werden und wieder nach außen an die Gehäusewand geführt werden. Die äußere Gehäusewand und die mit der Säscheibe bzw. Fächerscheibe ergebende Nut sorgen wiederum erneut für eine Beruhigung der Körner. Manche der Körner wären ohne Leitsteg in Gefahr, den Füllbereich undefiniert zu verlassen, woraus eine erhöhte Gefahr besteht, dass sich auch zufällig in Richtung Dosiererausgang wandern können. Durch das Abbremsen des Korns werden diese ggf. wiederholt nach außen gedrängt. Somit erhöht sich auch die Wahrscheinlichkeit, dass das Korn in die Tasche wandert, oder zumindest als Traube oben drauf liegt. Somit wird zumindest das unterste Korn in die Tasche gedrückt, so dass es definiert in den Vereinzelungsbereich geschleudert werden kann. Durch das Anliegen im Bereich der Vereinzelungstasche wird der Transport (Wurfbewegung) durch den Vereinzelungsbereich wesentlich definierter. Der Fächer der Vereinzelungscheibe sorgt für eine Beschleunigung und für eine Führung der Körner nach außen. Der Leitsteg sorgt für ein Abbremsen und ein nach außen Führen des Korns. Diese Pendelbewegung zwischen Beschleunigung und Abbremsen führt die Körner allmählich nach außen und zur Tasche.

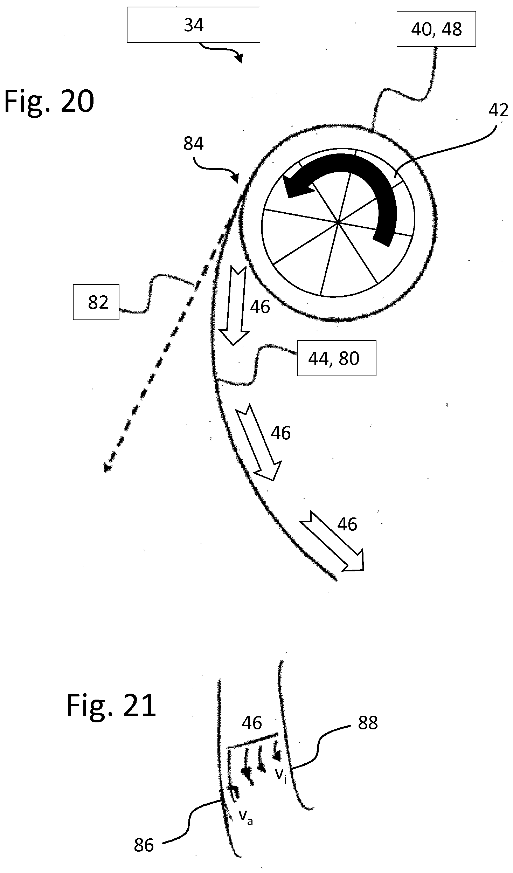

Die schematische Darstellung der Fig.20 veranschaulicht einige weitere Aspekte des erfindungsgemäßen Verfahrens sowie der erfindungsgemäßen Dosiervorrichtung 34. So weist diese die in der Fig. 2 gezeigte Luftzuführung 38 zu ihrem Gehäuse 48 auf, in dem die Förder- bzw. Fächerscheibe 42 rotiert, bspw. angetrieben von einem Elektromotor. Die eintretende Zuluft 36 durchströmt das Dosieraggregat 40 und tritt tangential durch die Ausgangsleitung 44 aus. Die einströmende Luft 36 trägt das zu verteilende körnige Gut, insbesondere die Saatkörner, die innerhalb des Dosieraggregats 40 zumindest teilweise von der dort hindurchgeleiteten Luftströmung getrennt und vergleichmäßigt, d.h. in weitgehend gleichmäßige Abstände voneinander gebracht werden. Die als Fallrohr oder Saatleitungsrohr 80 ausgebildete Ausgangsleitung 44 weicht vom geradlinigen tangentialen Verlauf 82 (unterbrochene Linie) ab und weist eine gleichmäßige oder sich öffnende Krümmung auf, die der Krümmung des Gehäuses 48 der Dosiervorrichtung 34 folgt, jedoch einen größeren Radius aufweist, der am tangentialen Übergang 84 zum Fallrohr 80 beginnt. Insbesondere kann das Fallrohr oder Saatleitungsrohr 80 eine sichelförmige Kontur aufweisen, die insbesondere an einer sog. Fangrolle münden kann, die auf dem Boden abrollt und dafür sorgt, dass die aus dem Fallrohr beförderten Körner unmittelbar in den Boden gedrückt werden und nicht etwa verspringen.

Was die Fig. 20 nicht deutlich erkennen lässt, ist ein Krümmungsverlauf des Saatleitungsrohrs 80, der sich ggf. zu seiner unteren Mündungsöffnung, die sich in Nähe des Ackerbodens 32 befindet, etwas reduzieren kann. Da im Bereich der Säschar 30 sinnvollerweise eine (hier nicht dargestellte) Fangrolle o. dgl. angeordnet sein kann, die dazu dient, ein Verspringen der schnell in den Boden beförderten Körner zu verhindern, kann es je nach Anordnung der Dosiervorrichtung 34 im Bereich der Saatleitung 28 sinnvoll sein, die Krümmung des Saatleitungsrohrs 80 daran anzupassen, was eine engere Krümmung im Bereich der unteren Mündung des Saatleitungsrohrs 80 erforderlich machen kann.

Wie es die Fig. 21 verdeutlicht, bewegen sich die Körner im Fallrohr 80 bzw. der Ausgangsleitung 44 im Wesentlichen entlang der Außenkontur 86. Das Dosieraggregat 40 ist so konzipiert, dass sich Körner entlang einer Wand bzw. Innenmantelfläche im Dosierer 34 bewegen. Das Fallrohr 80 folgt in seinem Verlauf der Kontur dieser Innenmantelfläche tangential, allerdings mit vergrößertem Krümmungsradius. Das Saat- oder Fallrohr 80 (Ausgangsleitung 44) ist annähernd sichelförmig gestaltet, wodurch das Saatgut die bereits eingenommene Kreisbahn weiter verfolgen kann. Hierdurch können Kollisionen der Körner im Saatrohr 80 und damit ein Verspringen und eine ungenaue Abgabe des Saatgutes am unteren Ende des Fallrohrs 80 und seiner Mündung zur Säschar 30 vermieden bzw. verhindert werden.

Die Fig. 21 lässt erkennen, dass die Luftgeschwindigkeit am Außenbereich 86 größer als am Innenbereich 88 der Krümmung ($v_a > v_i$), so dass auch die von der Luftströmung 46 getragenen Körner sich im Bereich der schnelleren Luftströmung ($v_a$) befinden. Durch die weitgehend gleichmäßige und verwirbelungsarme Strömung kollidieren die Körner kaum mit den Wänden der Saatleitung 80 und behalten dadurch ihre Abstände voneinander bei. Dies ermöglicht die weitgehend äquidistante Kornabgabe mit exakt definierbaren Abständen und definierbarer Abgabegeschwindigkeit. Die Zuluft 36 in der Zuführleitung 38 kann bspw. eine Strömungsgeschwindigkeit von ca. 20 m/s aufweisen, wobei die in der Luft getragenen Körner typischerweise eine etwas geringere Fördergeschwindigkeit von ca. 10 bis 15 m/s aufweisen können. Die durch die schnell rotierende Förder- bzw. Fächerscheibe 42 innerhalb des Dosieraggregats 40 beschleunigte, durch die Ausgangsleitung 44 bzw. das Saatleitungsrohr 80 austretende Luftströmung 46 kann dann eine etwas höhere Strömungsgeschwindigkeit von bspw. 25 m/s aufweisen. D.h., die Luftströmung 46 und damit auch die mitgetragenen Körner werden gegenüber dem Eingang 38 deutlich beschleunigt. In diesem Zusammenhang ist allerdings zu erwähnen, dass die Beschleunigung der Luftströmung im Bereich der Dosiervorrichtung 34 in erster Linie den engeren Leitungsquerschnitten der Ausgangsleitung 44 gegenüber der Zuführleitung 38 geschuldet ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Bezugszeichenliste

| 10 | Sämaschine |
|---|---|
| 12 | Vorratsbehälter |
| 14 | Dosiereinrichtung |
| 16 | Luftstrom |
| 18 | Gebläse |
| 20 | Luftleitung |
| 22 | Steigrohr (Wellrohr) |
| 24 | Zentralverteiler, zentraler Verteiler |
| 26 | körnertragender Luftstrom, körnertragende Luftströmung |
| 28 | Saatleitung |
| 30 | Säschar |
| 32 | Boden, Ackerboden |
| 34 | Dosiervorrichtung |
| 36 | Zuluft, Zuluftströmung |
| 38 | Zuführleitung |
| 40 | Dosieraggregat |
| 42 | Scheibe, Förderscheibe, Fächerscheibe, Mitnehmerscheibe, Vereinzelungsscheibe |
| 44 | Ausgangsleitung |
| 46 | austretende Luft (aus Dosiervorrichtung austretende Luft) |
| 48 | Gehäuse |
| 50 | Leitsteg |
| 52 | Fächerscheibe |
| 54 | Innenraum |
| 56 | Stirnseite, Flachseite |
| 58 | Korn |
| 58a | erstes Korn |
| 58b | zweites Korn |
| 60 | Außenseite, konvexe Außenseite |
| 62 | Innenmantelfläche |
| 64 | transportierte Körner |
| 66 | Mitnehmerscheibe, rotierende Mitnehmerscheibe |
| 68 | feststehendes Fächersieb |
| 70 | Leitsteg |
| 72 | Blende |
| 74 | flächiger Leitsteg, |

76      Aussparung, Körnertasche
78      Körner
80      Fallrohr, Saatleitungsrohr
82      tangentialer Verlauf
84      tangentialer Übergang
86      Außenkontur, Außenbereich, äußerer Bereich
88      Innenkontur, Innenbereich, innerer Bereich

**Patentansprüche**

1. Dosiereinheit zur Dosierung von körnigem Gut wie Samenkörner, Dünger o. dgl., die insbesondere Bestandteil eines Verteil- oder Säaggregats einer Verteil- oder Sämaschine (10) ist, mit einer tangential in ein Dosieraggregat (40) mündenden Zuführleitung (38) zur Zuführung einer Luftströmung (26, 36), die das körnige Gut trägt und befördert, wobei das Dosieraggregat (40) eine ungefähr kreisbogenförmige Innenmantelfläche (62) mit einem Bogenwinkel von wenigstens 180 Grad, insbesondere von 270 Grad oder mehr aufweist, mit Einrichtungen zur zumindest teilweisen Separierung des an der Innenmantelfläche (62) geführten körnigen Guts von der tragenden und fördernden Luftströmung (26, 36), und mit einer sich tangential an das Dosieraggregat (40) anschließenden und zumindest abschnittsweise geradlinig oder leicht gekrümmt verlaufenden Ausgangsleitung (44) zur Ableitung der Luftströmung (46) mit dem annähernd gleichmäßig dosierten und/oder äquidistant beförderten körnigen Gut, wobei innerhalb des Dosieraggregats (40) wenigstens eine in etwa in einer Querschnittsebene des Gehäuses des Dosieraggregats (40) angeordnete Leitkante zur Führung der Körner sowie eine mit Fächern (50) ausgestattete rotierende Mitnehmer- und/oder Vereinzelungsscheibe (42, 52) angeordnet sind, **dadurch gekennzeichnet, dass** ein innerhalb des Dosieraggregats (40) angeordnetes Fächersieb (68) vorgesehen ist, das einen Leitsteg (70) oder zwei, drei oder mehr Leitstege (70) aufweist, die sich jeweils von einem Zentrum des Dosieraggregats (40) radial, schräg oder gekrümmt in Richtung zur Innenmantelfläche (62) erstrecken.

2. Dosiereinheit nach Anspruch 1, bei der die Leitstege (70) an einer Stirnseite (56) des Innenraums (54) des Dosieraggregats (40) verankert sind.

3. Dosiereinheit nach Anspruch 1 oder 2, bei der die Leitstege (70) jeweils eine Höhe aufweisen, die mindestens einem Drittel der Innenraumbreite zwischen den gegenüber liegenden Stirnflächen (56) des Dosieraggregats (40) entsprechen.

4. Dosiereinheit nach einem der Ansprüche 1 bis 3, bei der die mit Fächern (50) ausgestattete Mitnehmer- und/oder Vereinzelungsscheibe (42, 52) ungefähr koaxial zum vorgesetzten Fächersieb (68) rotiert.

5. Dosiereinheit nach einem der Ansprüche 1 bis 4, bei der die Ausrichtung der Fächer (50) der rotierenden Fächerscheibe bzw. der Mitnehmer- und/oder Vereinzelungsscheibe (42, 52) entgegengesetzt zu der Ausrichtung der Leitstege (70) des feststehenden Fächersiebes (68) ist.

6. Dosiereinheit nach einem der Ansprüche 1 bis 5, bei der die Fächer (50) der Mitnehmer- und/oder Vereinzelungsscheibe (52) und/oder die Leitstege (70) des Fächersiebes (68) sichelförmig gekrümmt sind.

7. Dosiereinheit nach einem der Ansprüche 1 bis 6, bei der eine gleichmäßige oder sich mit zunehmendem Abstand vom Dosieraggregat (40) sichelförmig öffnende Krümmung der Ausgangsleitung (44) tangential an eine kornführende Innenwandung (62) des Dosieraggregats (40) anschließt.

8. Verfahren zur Dosierung von körnigem Gut wie Samenkörner, Dünger o. dgl., insbesondere innerhalb eines Verteil- oder Säaggregats einer Verteil oder Sämaschine (10), bei dem das durch eine Luftströmung getragene und beförderte körnige Gut durch eine Zuführleitung (38) tangential in ein Dosieraggregat (40) geleitet, dort in einem ungefähr kreisbogenförmigen Verlauf mit einem Bogenwinkel von wenigstens 180 Grad, insbesondere von 270 Grad oder mehr unter zumindest teilweiser Separierung des körnigen Guts von der tragenden und fördernden Luftströmung (26, 36) geführt und tangential in eine sich an das Dosieraggregat (40) anschließende und zumindest abschnittsweise geradlinig oder leicht gekrümmt verlaufende Ausgangsleitung (44) geleitet wird, wobei das dort durch Unterstützung einer mit Fächern (50) ausgestatteten rotierenden Mitnehmer- und/oder Vereinzelungsscheibe (42, 52) annähernd gleichmäßig dosierte und/oder äquidistant beförderte körnige Gut von der das Dosieraggregat (40) weitgehend vollständig durch die Ausgangsleitung (44) verlassenden abgeleiteten Luftströmung (46) getragen wird, **dadurch gekennzeichnet, dass** innerhalb des Dosieraggregats (40) wenigstens ein Fächersieb (68) angeordnet ist, das wenigstens einen Leitsteg (70) oder zwei, drei oder mehr Leitstege (70) aufweist, die sich jeweils von einem Zentrum des Dosieraggregats (40) radial, schräg oder gekrümmt in Richtung zur Innenmantelfläche (62) erstrecken.

9. Verfahren nach Anspruch 8, bei dem das körnige Gut innerhalb des Dosieraggregats (40) mit mechanischer Unterstützung der rotierenden Vereinzelungsscheibe (42, 52) und/oder unter zumindest teilweiser Separierung von der tragenden Luftströmung (26, 36) an einer Innenmantelfläche (62) oder Innenwandung geführt wird, wobei den sich der Ausgangsleitung (44) nähernden einzelnen Körnern in etwa gleiche Abstände voneinander aufgeprägt werden.

10. Verfahren nach Anspruch 8 oder 9, bei dem die Luftströmung (26, 36) in einem inneren Bereich des Dosieraggregats (40) und zumindest teilweise von den kornführenden Bereichen der Innenmantelfläche (62) oder Innenwandung beabstandet, insbesondere weitgehend im Bereich des Fächersiebs (68) geführt wird.

11. Verfahren nach einem der Ansprüche 8 bis 10, bei dem die das körnige Gut tragende Luftströmung (26, 36) ununterbrochen von der Zuführleitung (38), durch das Dosieraggregat (40) und bis zur Ausgangsleitung (44) geführt wird.

12. Verfahren nach einem der Ansprüche 8 bis 11, bei dem die durch die Ausgangsleitung (44) geführte und das annähernd äquidistant beförderte körnige Gut tragende und fördernde Luftströmung (26, 36) innerhalb des Dosieraggregats (40) beschleunigt wird, insbesondere unter Einwirkung der rotierenden Vereinzelungsscheibe (42, 52).

13. Verfahren nach Anspruch 12, bei dem die im Dosieraggregat (40) beschleunigte Luftströmung (26, 36, 46) mit einer Geschwindigkeit in die Ausgangsleitung (44) eintritt und aus dieser hinaustritt, die größer ist als eine Zuführgeschwindigkeit, mit der die Luftströmung (26, 36) in die Zuführleitung (38) eintritt.

**Claims**

1. A metering apparatus for metering granular material, such as seeds, fertilizer and the like, in particular which constitutes a part of a distribution unit or sowing unit of a distribution machine or sowing machine (10), comprising a feed tube (38) leading tangentially into a metering unit (40) in order to supply an airflow (26, 36), which carries and conveys the granular material, wherein the metering unit (40) exhibits an inner cover surface (62) shaped approximately as a circular arc with an arc angle of at least 180 degrees, in particular of 270 degrees or more, comprising devices to separate the granular material guided along the inner cover surface (62) at least partially from the carrying and conveying airflow (26, 36), and an outlet tube (44), which subsequently connects tangentially to the metering unit (40) and runs, at least in sections, in a straight line or slightly curved, to discharge the airflow (46) with the granular material, which is approximately evenly metered and/or conveyed in approximately equal spacing, wherein within the metering unit (40), there is arranged at least one guide web for guiding the seeds, with the guide web being arranged approximately on a cross-sectional plane of the housing of the metering unit (40), and a rotating conveyor and/or singling disk (42, 52) equipped with fans (50), **characterised in that** a fan screen (68) is provided, which is arranged within the metering unit (40) and comprises one guide web (70) or two, three or more guide webs (70), each extending from a centre of the metering unit (40) radially, transversely or curved in the direction of the inner cover surface (62).

2. The metering apparatus as recited in claim 1 wherein the guide webs (70) are anchored to the front side (56) of the interior (54) of the metering unit (40).

3. The metering apparatus as recited in claim 1 or 2 wherein the guide webs (70) each have a height that corresponds to at least a third of the interior width between the opposing front surfaces (56) of the metering unit (40).

4. The metering apparatus as recited in one of the claims 1 to 3 wherein the conveyor and/or singling disk (42, 52) equipped with fans (50) rotates approximately coaxially to the fan screen (68) positioned in front.

5. The metering apparatus as recited in one of the claims 1 to 4 wherein the fans (50) of the rotating fan disk or of the conveyor and/or singling disk (42, 52) are oppositely oriented relative to the orientation of the guide webs (70) of the fixed fan screen (68).

6. The metering apparatus as recited in one of the claims 1 to 5 wherein the fans (50) of the conveyor and/or singling disk (52) and/or the guide webs (70) of the fan screen (68) are curved in a sickle shape.

7. The metering apparatus as recited in one of the claims 1 to 6 wherein a curvature of the outlet tube (44), which is uniform or opens up in a sickle shape with increasing distance from the metering unit (40), connects tangentially to a seed conveying inner wall (62) of the metering unit (40).

8. A method for metering granular material, such as seeds, fertilizer and the like, in particular within a distribution unit or sowing unit of a distribution machine or sowing machine (10) wherein the granular material, which is carried and conveyed by an airflow, is directed tangentially through a feed tube (38) into a metering unit (40) where it is guided along an approximately circular arc path with an arc angle of at least 180 degrees, in particular of 270 degrees or more, while separating the granular material from the carrying and conveying airflow (26, 36) at least partially, and wherein the granular material is directed tangentially into an outlet tube (44), which is subsequently connected to the metering unit (40) and runs, at least in sections, in a straight line or slightly curved wherein the granular material, which is approximately evenly spaced and/or evenly metered with the support of a rotating conveyor and/or singling disk (42, 52) equipped with fans (50), is carried by the airflow (46) being discharged and exiting the metering unit (40) largely completely through the outlet tube (44), **characterised in that** inside the metering unit (40), at least one fan screen (68) is arranged, which comprises at least one guide web (70) or two, three or more guide webs (70), each extending from a centre of the metering unit (40) radially, transversely or curved in the direction of the inner cover surface (62).

9. The method as recited in claim 8 wherein the granular material is guided within the metering unit (40) along an inner cover surface (62) or inner wall with the mechanical support of the rotating singling disk (42, 52) and/or by separating it at least partially from the carrying airflow (26, 36) wherein the individual seeds approaching the outlet tube (44) are brought into approximately the same distance from one another.

10. The method as recited in claim 8 or 9 wherein the airflow (26, 36) is guided in an inner area of the metering unit (40) and at least partially spaced apart from the seed carrying areas of the inner cover surface (62) or inner wall, in particular largely in the area of the fan screen (68).

11. The method as recited in one of the claims 8 to 10 wherein the airflow (26, 36) carrying the granular material is continuously guided from the feed tube (38), through the metering unit (40) and to the outlet tube (44).

12. The method as recited in one of the claims 8 to 11 wherein the airflow (26, 36) guided through the outlet tube (44) and carrying and conveying the granular material in approximately equal spacing is accelerated within the metering unit (40), in particular under the impact of the rotating singling disk (42, 52).

13. The method as recited in claim 12 wherein the airflow (26, 36, 46) accelerated in the metering unit (40) enters and exits the outlet tube (44) at a speed that exceeds a feeding speed, at which the airflow (26, 36, 46) enters the feed tube (38).

**Revendications**

1. Unité de dosage destiné à doser des matières granulaires telles que graines, engrais ou similaires, qui, en particulier, est une partie constituante d'un groupe de distribution ou à semer d'un(e) machine de distribution ou semoir (10), comprenant une conduite d'amenée (38) qui débouche tangentiellement dans un groupe de dosage (40) et est destinée à amener un courant d'air (26, 36) qui porte et transporte les matières granulaires, ledit groupe de dosage (40) présentant une surface latérale intérieure (62) à peu près en arc de cercle ayant un angle d'arc d'au moins 180 degrés, en particulier de 270 degrés ou plus, des dispositifs destinés à séparer au moins en partie, dudit courant d'air (26, 36) portant et transportant, les matières granulaires guidées sur la surface latérale intérieure (62), ainsi qu'une conduite de sortie (44) qui est contiguë tangentiellement audit groupe de dosage (40) et s'étend, au moins par sections, de manière rectiligne ou légèrement courbée et qui est destinée à évacuer le courant d'air (46) avec les matières granulaires dosées de manière approximativement régulière et/ou transportées de manière équidistante, dans laquelle au moins une arête de guidage qui est disposée à peu près dans un plan de section du boîtier du groupe de dosage (40) et destinée à guider les graines ainsi qu'un disque d'entraînement et/ou d'individualisation (42, 52) tournant pourvu d'éventails (50) sont disposés à l'intérieur du groupe de dosage (40), **caractérisée par le fait qu'**un crible en éventail (68) disposé à l'intérieur du groupe de dosage (40) est prévu qui présente une entretoise de guidage (70) ou deux, trois entretoises de guidage (70) ou plus lesquelles s'étendent chacune à partir d'un centre du groupe de dosage (40) radialement, en biais ou de manière courbée en direction de la surface latérale intérieure (62).

2. Unité de dosage selon la revendication 1, dans laquelle lesdites entretoises de guidage (70) sont ancrées sur une face frontale (56) de l'espace intérieur (54) du groupe de dosage (40).

3. Unité de dosage selon la revendication 1 ou 2, dans laquelle lesdites entretoises de guidage (70) présentent chacune une hauteur qui correspond au moins à un tiers de la largeur d'espace intérieur entre les faces frontales (56) opposées du groupe de dosage (40).

4. Unité de dosage selon l'une quelconque des revendications 1 à 3, dans laquelle ledit disque d'entraînement et/ou d'individualisation (42, 52) pourvu d'éventails (50) tourne de façon à peu près coaxiale par rapport au crible en éventail (68) placé devant.

5. Unité de dosage selon l'une quelconque des revendications 1 à 4, dans laquelle l'orientation des éventails (50) du disque à éventails tournant ou bien du disque d'entraînement et/ou d'individualisation (42, 52) est opposée à l'orientation des entretoises de guidage (70) du crible en éventail (68) fixe.

6. Unité de dosage selon l'une quelconque des revendications 1 à 5, dans laquelle les éventails (50) du disque d'entraînement et/ou d'individualisation (52) et/ou les entretoises de guidage (70) du crible en éventail (68) sont courbés en forme de croissant.

7. Unité de dosage selon l'une quelconque des revendications 1 à 6, dans laquelle une courbure de la conduite de sortie (44), qui est régulière ou s'ouvre en forme de croissant avec une distance croissante du groupe de dosage (40) est tangentiellement contiguë à une paroi intérieure (62) du groupe de dosage (40), qui guide les graines.

8. Procédé de dosage de matières granulaires telles que graines, engrais ou similaires, en particulier à l'intérieur d'un groupe de distribution ou à semer d'un(e) machine de distribution ou semoir (10), dans lequel les matières granulaires portées et transportées par un courant d'air sont guidées à travers une conduite d'amenée (38) tangentiellement dans un groupe de dosage (40) où elles sont guidées suivant une allure à peu près en arc de cercle ayant un angle d'arc d'au moins 180 degrés, en particulier de 270 degrés ou plus, tout en séparant au moins en partie les matières granulaires dudit courant d'air (26, 36) portant et transportant, et sont guidées tangentiellement dans une conduite de sortie (44) qui est contiguë audit groupe de dosage (40) et s'étend, au moins par sections, de manière rectiligne ou légèrement courbée, dans lequel les matières granulaires qui y sont dosées de manière approximativement régulière et/ou transportées de manière équidistante grâce au support par un disque d'entraînement et/ou d'individualisation (42, 52) tournant pourvu d'éventails (50) sont portées par le courant d'air (46) évacué qui quitte le groupe de dosage (40) dans une large mesure complètement à travers ladite conduite de sortie (44), **caractérisé par le fait qu'**au moins un crible en éventail (68) est disposé à l'intérieur du groupe de dosage (40), qui présente au moins une entretoise de guidage (70) ou deux, trois entretoises de guidage (70) ou plus lesquelles s'étendent chacune à partir d'un centre du groupe de dosage (40) radialement, en biais ou de manière courbée en direction de la surface latérale intérieure (62).

9. Procédé selon la revendication 8, dans lequel les matières granulaires sont guidées à l'intérieur du groupe de dosage (40) grâce au support mécanique par le disque d'individualisation (42, 52) tournant, et/ou en étant séparées au moins en partie dudit courant d'air (26, 36) portant, sur une surface latérale intérieure (62) ou paroi intérieure, aux graines individuelles s'approchant de la conduite de sortie (44) étant imposées des distances à peu près égales les unes des autres.

10. Procédé selon la revendication 8 ou 9, dans lequel le courant d'air (26, 36) est guidé dans une zone intérieure du groupe de dosage (40) et au moins en partie à distance des zones guidant les graines de la surface latérale intérieure (62) ou paroi intérieure, en particulier dans une large mesure au niveau du crible en éventail (68).

11. Procédé selon l'une quelconque des revendications 8 à 10, dans lequel le courant d'air (26, 36) portant les matières granulaires est guidé de manière continue depuis la conduite d'amenée (38) jusqu'à la conduite de sortie (44) en passant à travers le groupe de dosage (40).

12. Procédé selon l'une quelconque des revendications 8 à 11, dans lequel le courant d'air (26, 36) guidé à travers la conduite de sortie (44) et portant et transportant les matières granulaires transportées de manière approximativement équidistante est accéléré à l'intérieur du groupe de dosage (40), en particulier sous l'action dudit disque d'individualisation (42, 52) tournant.

13. Procédé selon la revendication 12, dans lequel le courant d'air (26, 36, 46) accéléré à l'intérieur du groupe de dosage (40) entre dans la conduite de sortie (44) et sort de celle-ci à une vitesse qui est supérieure à une vitesse d'alimentation à laquelle le courant d'air (26, 36) entre dans la conduite d'amenée (38).

Fig. 1

Fig. 2

# Fig. 3

## Fig. 4

Fig. 5

34, 40

70

68

3807
A3806

## Fig. 6

34, 40

68

Fig. 7

34, 40

50

52

## Fig. 8

Fig. 9

Fig. 10

34, 40

70

72

74

72

68

48

# Fig. 11

64, 76

58b

58a

52

Fig. 12

64, 76

74

Fig. 13

64, 76

Fig. 14

78

64, 76

70

Fig. 15

78

Fig. 16a

Fig. 16b

# Fig. 17

58b

58a

Fig. 18

Fig. 19

34

40, 48

42

Fig. 20

84

82

46

44, 80

46

46

Fig. 21

46

88

$v_i$

$v_a$

86

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0266722 B1
- EP 1243172 A2
- US 5082141 A
- WO 2013186175 A1
- DE 102012105081 A1
- WO 2004004441 A1